# FASCICULE DE BREVET EUROPEEN

(11) **EP 3 262 864 B1**
(45) Date de publication et mention de la délivrance du brevet: **12.12.2018**
(21) Numéro de dépôt: 16707692.6
(22) Date de dépôt: 25.02.2016
(51) Int. Cl.: H04W 24/02, H04W 92/20

(54) **ETABLISSEMENT D'UNE LIAISON X2 UTILISANT DES TERMINAUX VIRTUELS**
AUFBAU EINES X2-LINKS UNTER VERWENDUNG VIRTUELLER ENDGERÄTE
SETUP OF AN X2 LINK USING VIRTUAL TERMINALS

(30) Priorité: 25.02.2015 FR 1500366
(43) Date de publication de la demande: 03.01.2018
(73) Titulaire: NAVAL GROUP, 75015 Paris (FR)
(72) Inventeur: FAVRAUD, Romain, 06410 Biot (FR); NIKAEIN, Navid, 06700 Saint-Laurent-du-Var (FR)
(74) Mandataire: Lavoix
(86) Numéro de dépôt international: PCT/EP2016/054002
(87) Numéro de publication internationale: WO 2016/135252

(56) Documents cités:
- WO-A2-2013/153128
- FR-A1- 2 910 775

## Description

La présente invention concerne une station de base pour un réseau de radiocommunications comprenant un ensemble de stations de base et des premiers terminaux utilisateurs, ladite station de base comprenant :
- un module d'interface radio adapté pour émettre et recevoir des données radiofréquences ; et
- un bloc pilote adapté pour établir une liaison de communication et communiquer sur ladite liaison avec au moins un premier terminal utilisateur conformément à un protocole radio comprenant une section de protocole radio propre aux stations de base et une section de protocole radio propre aux terminaux utilisateurs, en utilisant ledit module d'interface radio.

Les réseaux cellulaires de 4ème génération, en particulier le LTE et le LTE-A présentent un certain nombre d'avantages parmi lesquels la possibilité de communications haut débit, une faible latence, de multiples largeurs de bande, une tolérance élevée aux mouvements relatifs des transmetteurs, une variété des terminaux disponibles et un coût relativement faible grâce aux investissements du secteur civil.

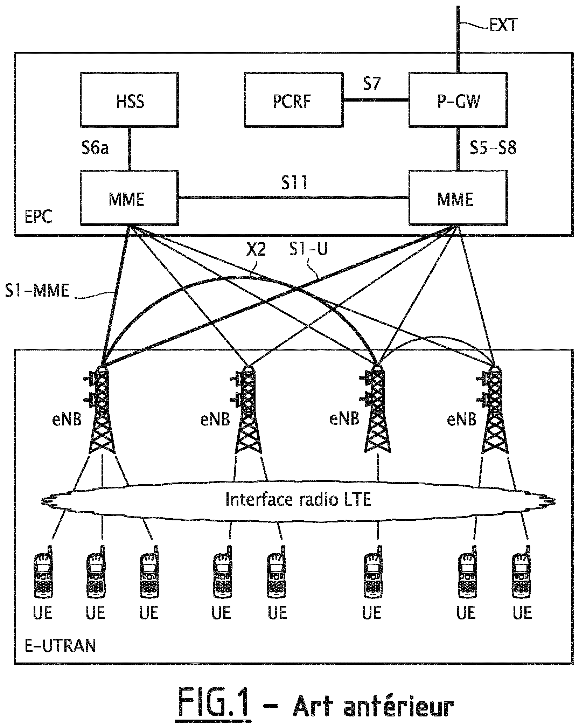

L'architecture classique de ces réseaux est représentée en figure 1. Elle repose sur un ensemble planifié de stations de base généralement fixes, appelées eNodeBs ou eNBs (en anglais « evolved Node B »), qui fournissent un service radio sans fil via leur interface radio LTE à des utilisateurs mobiles, appelés UEs (en anglais « User Equipements »).

Les eNBs et les UEs constituent l'E-UTRAN (Evolved Universal Terrestrial Radio Access Network).

Ces eNBs sont reliés par des liens logiques aux MME (en anglais « Mobility Management Entity ») et aux P/S-GW (Packet/Serving Gateway) du coeur de réseau, appelé EPC (en anglais « Evolved Packet Core »). Les liens logiques (S1-MME, S1-U, S6a, S7, S5-8, S11) entre ces éléments sont souvent réalisés via des liaisons physiques filaires (par exemple Fibre, Câble, ADSL) ou sans fil point à point, voire point à multipoint (technologies propriétaires sur bandes ISM (Industrielle, Scientifique et Médicale) ou licenciées, Wi-Fi...).

L'EPC centralise les communications. Les échanges entre les eNBs ou entre les UEs s'appuient sur l'EPC et les eNBs ne peuvent pas communiquer directement entre eux par leur interface radio LTE, bien qu'un lien logique (X2) permette la communication entre deux eNBs, celui-ci n'autorise la transmission que de certains messages spécifiques de contrôle.

Si les eNBs perdent ou ne peuvent assurer leur connexion avec l'EPC (ou avec différents EPCs connectés entre eux), par exemple lors d'une catastrophe ou dans un scénario de mobilité des eNBs, il ne peut alors plus y avoir d'échanges entre eux ou entre leurs UEs (qu'ils soient gérés par un seul eNB ou portés par plusieurs eNBs différents), et cela même lorsque lesdits eNBs se trouvent en portée radio (LTE) les uns des autres.

Pour remédier à ce problème, des liens physiques entre un eNB et le coeur de réseau EPC, nommés « liens backhauls » peuvent être disposés, mais ils nécessitent l'installation de liens radio spécifiques.

Il existe par ailleurs dans l'architecture LTE des noeuds relais (en anglais « relay nodes »), capables de communiquer à la fois avec des UEs et avec un eNB, appelé « Donor eNB » ou DeNB. Ces noeuds relais permettent d'étendre la couverture d'un eNB et d'en améliorer la capacité. Mais ces noeuds relais ne sont pas capables de gérer seuls des UEs, ils dépendent de leur DeNB qui leur fournit un accès à l'EPC et ils ne peuvent se connecter qu'à un seul eNB.

On connaît le document FR 2 910 775 A1 qui décrit un noeud de communication comportant une station de base locale apte à émettre des signaux de balise pour etre détectée par des terminaux radio adjacents, un terminal radio local avec des moyens de détection de signaux de balise pour détecter une station de base adjacente audit terminal radio local, et des moyens de gestion des liaisons radio pour favoriser l'établissement d'une liaison radio entre ledit noeud de communication et au moins un noeud de communication distant incluant au moins un élément choisi dans le groupe consistant en une station de base adjacente audit terminal radio local et un terminal radio adjacent a ladite station de base locale. Un récepteur radio permet de recevoir sur un canal radio à bas débit des données de configuration définissant des ressources du support air devant être allouées à la station de base locale.

On connaît en outre le document WO 2013/153128 A2 qui décrit un système de communication dans des réseaux LTE comprenant au moins un terminal utilisateur pour communiquer par le biais d'une connexion sans fil avec une station de base macrocellulaire eNB et avec au moins une station de base cellulaire femto HeNB sur un système cellulaire, une interface X2 sans fil étant présente entre lesdites stations eNB et HeNB dans le reseau LTE pour fournir des services de communication audit terminal utilisateur.

A cet effet, suivant un premier aspect, l'invention propose une station de base du type précité et caractérisée en ce qu'elle comprend en outre une unité de gestion adaptée pour créer une pluralité de seconds terminaux utilisateurs, lesdits seconds terminaux utilisateurs créés étant des terminaux utilisateurs virtuels adaptés pour communiquer conformément audit protocole radio avec des stations de base voisines de ladite station de base, en utilisant ledit module d'interface radio.

Une telle station de base permet de créer un réseau maillé de stations de base et de transmettre directement entre stations de base des données selon par exemple le protocole LTE.

Dans des modes de réalisation, la station de base suivant l'invention comporte en outre une ou plusieurs des caractéristiques suivantes :
- l'unité de gestion est adaptée pour répartir sélectivement l'utilisation du module d'interface radio entre le bloc pilote, pour la communication entre ledit bloc pilote et l'au moins un premier terminal utilisateur, et les seconds terminaux virtuels pour leur communication avec des stations de base voisines ;
- l'unité de gestion affecte à chaque second terminal virtuel un identifiant respectif ;
- ledit protocole de communication est conforme à la norme LTE;
- un second terminal utilisateur virtuel est adapté pour effectuer régulièrement un balayage radio et pour détecter des stations de base voisines et pour indiquer à l'unité de gestion lesdites stations voisines détectées, ladite unité de gestion étant adaptée pour, lorsqu'une des stations de base voisines détectées ne fait pas partie des stations de base voisines ayant une liaison établie avec les seconds terminaux virtuels, créer un nouveau second terminal virtuel pour la mise en oeuvre de communications entre ledit nouveau second terminal virtuel et ladite station de base voisine détectée ;
- la station de base comporte un bloc de gestion de mobilité et une base d'informations d'authentification relatives aux premiers et seconds terminaux utilisateurs, ledit bloc de gestion de mobilité étant adapté pour, lorsque le bloc pilote reçoit, en provenance d'un premier terminal utilisateur, une requête de mise en oeuvre d'une liaison de communication avec ladite station de base conforme audit protocole de communication, procéder à l'authentification dudit premier terminal utilisateur en fonction d'éléments d'authentification indiqués dans la requête et des informations d'authentification dans la base relatives audit premier terminal utilisateur ; et dans laquelle l'unité de gestion est adaptée, lorsqu'elle crée un second terminal utilisateur virtuel, pour fournir audit second terminal utilisateur virtuel, des éléments d'authentification propres audit second terminal virtuel, chaque second terminal virtuel étant adapté pour, lorsqu'il émet une requête de mise en oeuvre d'une liaison de communication à destination d'une station de base voisine conformément audit protocole de communication, insérer, dans ladite requête, lesdits éléments d'authentification fournis par l'unité de gestion ;
- l'unité de gestion est adaptée pour stocker une liste des stations de base voisines connectées à ladite station de base, et
- chaque second terminal virtuel est adapté pour indiquer à l'unité de gestion la station de base voisine avec laquelle il a une liaison de communication courante établie, et l'unité de gestion est adaptée pour actualiser la liste des stations de base voisines connectées à ladite station de base, en insérant dans la liste, ladite station de base voisine indiquée, mise en correspondance, dans la liste, avec ledit second terminal virtuel ;
- le bloc pilote est adapté pour indiquer à l'unité de gestion lesdits premiers terminaux avec lesquels il a établi une liaison de communication courante, et lorsque un desdits premiers terminaux est un terminal virtuel d'une station de base voisine de ladite station de base, l'unité de gestion est adaptée pour actualiser la liste en y insérant ladite station de base voisine mise en correspondance, dans la liste, avec ledit premier terminal virtuel ;
- la station de base comprend un routeur et dans laquelle l'unité de gestion est adaptée pour actualiser des règles de routage en fonction de ladite liste actualisée des stations de base voisines connectées à ladite station de base, ledit routeur étant adapté pour router, en fonction de règles de routage actualisées par l'unité de gestion, des données sélectivement vers le bloc pilote pour émission vers des premiers terminaux utilisateurs ou vers des seconds terminaux virtuels pour émission vers des stations de base voisines.

Suivant un deuxième aspect, la présente invention propose un procédé de traitement dans une station de base pour un réseau de radiocommunications comprenant un ensemble de stations de base et des premiers terminaux utilisateurs, ladite station de base comprenant un module d'interface radio et un bloc pilote, comprenant les étapes suivantes :
- émission et réception de données radiofréquences par le module d'interface radio adapté ; et
- établissement d'une liaison de communication par le bloc pilote et communication par le bloc pilote sur ladite liaison avec au moins un premier terminal utilisateur conformément à un protocole radio comprenant une section de protocole radio propre aux stations de base et une section de protocole radio propre aux terminaux utilisateurs, en utilisant ledit module d'interface radio, ledit procédé étant caractérisé en ce qu'il comprend une étape de création, par une unité de gestion de ladite station de base, d'une pluralité de seconds terminaux utilisateurs virtuels adaptés pour communiquer conformément audit protocole radio avec des stations de base voisines de ladite station de base, en utilisant ledit module d'interface radio.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système de télécommunication LTE dans l'art antérieur ;
- la figure 2 représente une vue fonctionnelle d'une station de base dans un mode de réalisation de l'invention ;
- la figure 3 est une vue d'un réseau de stations de base dans un mode de réalisation de l'invention.

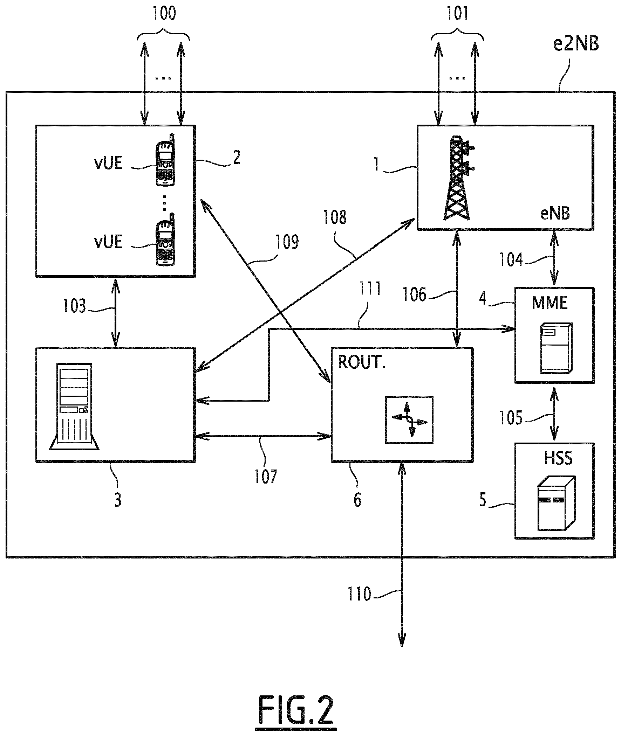

La figure 2 représente une vue fonctionnelle d'une station de base adaptée pour communiquer avec des terminaux utilisateurs radio, UEs, conformément à un protocole de communication, dans un mode de réalisation de l'invention.

Dans le cas particulier considéré, cette station de base est adaptée pour communiquer avec les UEs conformément au protocole radio LTE (en anglais « Long Term Evolution ») défini par le consortium 3GPP.

De manière connue, le protocole LTE définit des règles de communication propres aux terminaux utilisateurs et des règles de communication propres aux stations de base.

La station de base selon l'invention est nommée e2NB (« enhanced eNB » en anglais).

L'e2NB comprend un bloc eNB 1, un ensemble 2 de vUE(s), une unité de gestion 3, un bloc MME 4, un bloc HSS (pour « Home Subscriber Server ») 5 et un routeur 6.

Un vUE est un terminal utilisateur virtuel.

Dans un mode de réalisation, un vUE est adapté pour mettre en oeuvre les mêmes protocoles et fonctionnalités que les terminaux utilisateurs réels.

Dans le mode de réalisation considéré, le bloc eNB 1 et l'ensemble 2 de vUE(s) de l'e2NB se partagent une chaîne de traitement radio adaptée pour mettre en oeuvre le protocole radio LTE et comprenant :
- une antenne d'émission/réception radio définissant une zone de couverture radio de l'e2NB (qui est la même que la zone de couverture radio des vUEs de l'ensemble 2) et
- un module d'émission/réception radio adapté notamment pour moduler/démoduler les signaux : il reçoit ainsi un signal radiofréquence fourni par l'antenne, l'amplifie, le filtre et descend le signal utile de la porteuse radiofréquence en un signal en bande de base, puis le numérise ; il reçoit en outre un signal utile sous forme numérique à émettre, le dé-numérise, le module avec une porteuse radiofréquence et le délivre à l'antenne.

Dans d'autres modes de réalisation de l'invention, le bloc eNB 1 et l'ensemble 2 de vUE(s) de l'e2NB se partagent plusieurs chaînes de traitement radio adaptées pour mettre en oeuvre le protocole radio LTE (par exemple trois chaînes radio, avec chacune un module d'émission/réception radio et une antenne couvrant une portion distincte de l'espace de 120 degrés dans le plan horizontal, permettant ainsi de couvrir tout l'espace).

L'e2NB selon l'invention comporte en outre un microprocesseur et une mémoire (non représentés) stockant des instructions logicielles. L'e2NB est par exemple adapté pour effectuer au moins certaines des opérations décrites ci-dessous, suite à l'exécution des instructions logicielles, sur le microprocesseur.

### Bloc eNB

Le bloc eNB 1 réalise les fonctions d'un eNB LTE de l'art antérieur relativement aux terminaux utilisateurs (autres que ceux de son ensemble 2 de vUE(s)) situés dans sa zone de couverture radio : ces terminaux utilisateurs comprennent les terminaux utilisateurs réels et les vUE(s) faisant partie d'autres e2NBs situés dans sa zone de couverture radio.

Ainsi le bloc eNB 1 est adapté pour émettre régulièrement, via la chaîne de traitement radio, des signaux balises permettant à chacun de ces terminaux utilisateurs, réels et virtuels, de le détecter, de se synchroniser avec lui et d'obtenir de la part du bloc eNB 1 l'allocation de ressources pour échanger des données de signalisation et le cas échéant mettre en oeuvre une opération d'attachement au bloc eNB1 du l'e2NB.

Un UE, virtuel ou réel, souhaitant transmettre des données utiles (i.e. des données autres que des données de signalisation) à un destinataire, doit être attaché au bloc eNB 1 d'un e2NB selon l'invention, pour communiquer ces données via cet e2NB.

Lors d'une opération d'attachement au bloc eNB 1 de l'e2NB, un terminal utilisateur réel ou virtuel, transmet à l'eNB 1 des données d'identification et d'authentification de type SIM de ce terminal utilisateur. Dans le cas d'un UE réel, ces données sont basées sur des éléments stockés dans la carte SIM de l'UE. Dans le cas d'un UE virtuel, elles sont basées sur des éléments transmis par l'unité de gestion de l'e2NB au sein duquel l'UE a été créé.

L'eNB 1 reçoit ces informations, puis les fournit au bloc MME 4, qui met en oeuvre les étapes indiquées dans la norme LTE standard en vue de procéder à l'identification, à la confirmation que le terminal utilisateur identifié est bien autorisé à communiquer avec l'e2NB et à l'authentification du terminal utilisateur.

L'eNB 1 reçoit ensuite du bloc MME 4 la confirmation du bon déroulement de l'identification, de l'authentification et de l'attachement ou la notification de son échec.

On entend par « UE attaché à l'e2NB», un UE, réel ou virtuel, ayant réalisé avec succès une opération d'attachement à l'eNB 1 de cet e2NB.

Une fois l'UE authentifié, lorsqu'une communication est mise en oeuvre avec l'UE, l'eNB 1, qui sert de terminaison du flux IP transmis par l'UE, fournit ce flux IP au routeur 6 afin que ce dernier le dirige de manière adéquate en fonction du destinataire du flux.

Lorsqu'un UE attaché est un UE réel ou virtuel, le bloc eNB 1 indique à l'unité de gestion 3 les liaisons établies avec cet UE ainsi identifié, ainsi que un identifiant de l'UE, tel que l'IMSI (« International Mobile Subscriber Identity ») de l'UE transmis par l'UE lors de la procédure d'identification et qui est unique et liée à la carte SIM (« Subscriber Identity Module ») ou bien son IMEI (« International Mobile Equipment Identity »), associé éventuellement avec l'adresse IP de l'UE fournie par le MME.

Lorsque l'UE attaché est un vUE d'un e2NB voisin, l'unité de gestion 3 détermine l'identifiant de cet e2NB voisin au moyen par exemple d'une table de correspondance comprenant une liste d'IMSI de vUEs et indiquant pour chacun des IMSI l'identifiant de cellule E-CGI (« EUTRAN Cell Global Identifier ») (ou le Global eNB ID) correspondant, ce qui lui permet de savoir à quel e2NB appartient un vUE.

On notera qu'un identifiant d'un e2NB est aussi un identifiant du bloc eNB qu'il comporte et réciproquement, dans la mesure où il n'y a qu'un bloc eNB dans un e2NB.

### Ensemble de vUE(s)

L'ensemble 2 de vUE(s) comporte un ou plusieurs UE virtuels.

Chacun de ces UEs virtuels au sein de l'e2NB est créé (i.e instancié) par l'unité de gestion 3.

A chaque vUE sont ainsi associés un identifiant unique IMEI et un service SIM (IMSI et clef associée) comme décrit dans la suite.

Au niveau LTE, le vUE possède toutes les fonctionnalités d'un UE classique, notamment il est adapté pour décoder les messages qui lui sont transmis, coder ceux qu'il transmet, réaliser une procédure d'attachement, et ceci de manière indépendante des autres vUEs (au niveau implémentation, cela revient à lancer une nouvelle instance (« thread ») du programme mettant en oeuvre les opérations d'attachement, en lui passant comme paramètre le IMEI, ce qui va créer au fur et à mesure de l'évolution de la connexion du vUE, les éléments nécessaires à son fonctionnement, tels que les différentes mémoires tampons (« buffers ») pour les différentes couches protocolaires du modèle OSI etc.).

Il doit aussi informer lors de l'établissement de la connexion RRC (en anglais « Radio Resource Control ») avec l'eNB, de ses capacités matérielles au niveau de la chaîne radio. Celles-ci dépendent de la chaine radio réelle de l'e2NB, il faut donc fournir les informations concernant celle-ci au vUE.

Au démarrage de l'e2NB, un seul vUE est instancié ; il est adapté pour effectuer les opérations régulières de balayage radio conformément à la section du protocole LTE relative aux terminaux utilisateurs pour détecter les e2NBS voisins, i.e. les e2NBs autres que l'e2NB au sein duquel le vUE a été créé et qui se trouvent à portée radio du vUE, et pour les indiquer à l'unité de gestion 3.

La couverture radio du vUE est celle de l'e2NB au sein duquel il a été créé (puisqu'ils utilisent la même chaîne radio). Il est colocalisé avec l'e2NB.

Dans cet exemple, un vUE ne peut s'attacher qu'à un seul e2NB du voisinage radio (dans d'autres modes de réalisation, un vUE peut s'attacher simultanément à plusieurs e2NB du voisinage radio) et comme dans le cas d'un UE réel, les données de communication utiles, émises et reçues par le vUE, empruntent les liaisons radio entre le vUE et l'e2NB d'attachement qui ont été réservées pour le vUE par l'e2NB d'attachement.

L'e2NB d'attachement est sélectionné par un vUE en fonction d'une liste noire d'e2NBs et/ou d'une liste blanche d'e2NBs fournie(s) par l'unité de gestion 3. La liste noire comprend les e2NBs sur lesquels l'attachement n'est pas autorisé et la liste blanche comprend les e2NBs sur lesquels l'attachement est autorisé.

Un UE virtuel est adapté pour effectuer, avec un e2NB sélectionné, les opérations d'attachement conformément à la section du protocole LTE relative aux terminaux utilisateurs.

Les données d'identification et d'authentification de type SIM propres à chaque vUE (plus généralement le service de type SIM) et qui sont requises pour l'opération d'attachement sont fournies à chaque vUE de l'ensemble 2 de vUE(s) par l'unité de gestion 3.

Lorsqu'un vUE de l'ensemble 2 de vUE(s) est attaché à un e2NB, le vUE notifie à l'unité de gestion 3 l'identifiant de cet e2NB auquel il est attaché ou l'identifiant du bloc eNB 1 de cet e2NB (par exemple le E-CGI ou Global eNB ID de l'eNB 1).

Un UE virtuel, une fois attaché à un e2NB voisin, est adapté pour émettre et recevoir des données, via cet e2NB d'attachement, avec un réseau selon l'invention comprenant les stations de base, de type eNBs ou e2NBs, connectées entre elles via les vUEs et comprenant les terminaux utilisateurs, réels et virtuels, attachés à ces stations de base.

L'émission radiofréquence et la réception radiofréquence de paquets par un vUE de l'ensemble 2 sont mises en oeuvre en utilisant la chaîne de traitement radio de l'e2NB, sur les liaisons radio affectées au vUE par son e2NB d'attachement.

### Unité de gestion

L'unité de gestion 3 est adaptée pour piloter la création, la suppression et le fonctionnement de chaque vUE de l'ensemble 2 de vUE(s).

Elle est adaptée pour déterminer, suite à la réception de l'indication d'e2NBs voisins détectés transmise par un vUE de l'ensemble 2, qu'une nouvelle connexion avec un de ces e2NBs détectés est à mettre en oeuvre (par exemple lorsque cet e2nB détecté ne fait pas partie de la liste des e2NBs voisins tenue par l'e2NB comme décrit ci-dessous).

Lorsqu'une telle nouvelle connexion avec un e2NB voisin est à mettre en oeuvre, l'unité de gestion fournit par exemple une liste blanche indiquant cet e2NB voisin à un vUE précédemment créé et non actuellement attaché s'il existe, afin qu'il procède à l'opération d'attachement. Et si tous les vUE(s) de l'ensemble 2 sont actuellement attachés, l'unité de gestion 3 créé un vUE supplémentaire qui pourra ainsi être attaché à l'e2NB voisin détecté.

On notera que dans un mode de réalisation, l'unité de gestion n'autorise pas un attachement entre un vUE de l'ensemble 2 et un e2NB voisin au cas où un terminal virtuel de cet e2NB voisin est déjà attaché à l'e2NB.

Dans ce cas, l'eNB voisin apparaît par exemple dans la liste noire de chaque nouveau vUE.

L'unité de gestion 3 est adaptée pour contrôler et piloter la topologie du réseau maillé d'e2NBs par la détermination des listes blanches et noires d'e2NBs respectives fournies aux vUEs.

L'unité de gestion 3 est en outre adaptée pour répartir entre le bloc eNB1 et chacun des vUEs de l'ensemble 2 le temps (et/ou la fréquence) d'utilisation de la chaîne de traitement radio de l'e2NB.

Les règles de cette répartition sont par exemple fonction des besoins respectifs communiqués par le bloc eNB 1 et chacun des vUEs.

L'unité de gestion 3 est adaptée pour fournir un service SIM aux vUEs de l'ensemble 2 comprenant notamment la fourniture d'éléments d'identification et d'authentification de type SIM à chaque vUE, afin que ce dernier puisse mener à bien les opérations d'attachement en fournissant alors à l'e2NB auquel il souhaite s'attacher ses données d'identification et d'authentification déterminées en fonction des éléments fournis par l'unité de gestion. Pour ce faire, l'unité de gestion 3 comprend des cartes SIM réelles et/ou virtuelles.

L'unité de gestion 3 est adaptée pour mémoriser, et mettre à jour, la liste des UE réels et virtuels, auquel le bloc eNB1 est attaché, en fonction d'informations correspondantes qui lui sont fournies par le bloc eNB1 indiquant les opérations d'attachement d'UE et de rupture d'attachement.

L'unité de gestion 3 est adaptée pour mémoriser, et mettre à jour, la liste des e2nBs voisins.

Cette liste des e2nBs voisins détaille :
- les identifiants des e2NBs voisins (chacun mis en correspondance de l'identifiant du bloc eNB 1 de cet e2NB) attachés aux vUE(s) de l'ensemble 2, chacun de ces e2NBs voisins étant mis en correspondance, dans la liste, avec l'identifiant du vUE de l'ensemble 2 qui lui est attaché et l'indication des liaisons radio allouées (voire en outre les performances de ces liaisons, par exemple le niveau de signal, indiquées par ce vUE à l'unité de gestion 3) ; et/ou
- l'identifiant de tout e2NB voisin comportant un ou des vUE(s) attachés au bloc eNB 1, chacun de ces e2NBs voisins étant mis en correspondance, dans la liste, avec l'identifiant du vUE attaché au bloc eNB 1 et l'indication des liaisons radio allouées (voire en outre les performances de ces liaisons, par exemple le niveau de signal, indiquées par le bloc eNB1 à l'unité de gestion 3).

Dans un mode de réalisation, l'unité de gestion 3 est adaptée pour communiquer avec les unités de gestion 3 d'autres e2NBs (par exemple via des vUEs respectifs) pour partager ces informations de leur liste d'e2NBs voisins définissant le maillage courant du réseau.

L'unité de gestion 3 est par exemple adaptée pour exploiter les informations de sa liste d'e2NBs voisins, voire aussi des informations des listes des e2NBs voisins communiquées, de manière à définir/modifier le maillage du réseau en vue de son amélioration, en supprimant, ajoutant des vUEs (et donc les liaisons correspondantes), ou en faisant changer l'e2NB d'attachement de vUEs.

L'unité de gestion 3 est adaptée pour définir les règles de routage en fonction notamment de cette topologie courante.

L'unité de gestion 3 est en outre adaptée pour définir les règles d'adressage IP.

On notera qu'un vUE de l'ensemble 2 peut être créé par l'unité de gestion 3 lorsqu'il existe déjà une liaison entre l'e2NB et un e2NB voisin (par l'intermédiaire d'un terminal utilisateur créé dans l'e2NB ou l'e2NB voisin), mais que le besoin en terme de débit de communication entre eux nécessite des capacités de communication supplémentaires.

### Bloc MME

Le bloc MME réalise les fonctions d'un MME LTE de l'art antérieur si ce n'est qu'il est capable de recevoir les paramètres et listes d'adresse IP qu'il peut donner aux UEs qui se connectent via l'unité de gestion 3 (à la place, le MME dans le réseau LTE de l'art antérieur récupère cela via le S/P-GW).

Le bloc MME 4 sur réception de chaque requête d'attachement de UE, virtuel ou réel, indiquant les éléments d'identification et d'authentification, et relayée par le bloc eNB 1, est adapté pour requérir à son tour auprès du bloc HSS 5 les informations pour confirmer que le UE est bien autorisé à communiquer sur le réseau et est correctement authentifié.

En outre, une fois l'UE, réel ou virtuel, authentifié avec succès, le bloc MME fournit une adresse IP à l'UE (ou vUE) à l'origine de la procédure (à noter que dans un mode de réalisation, l'UE peut sinon obtenir une adresse IP auprès du routeur 6, qui joue ici le rôle des S/P-GW d'un réseau LTE classique).

### Bloc HSS

Le bloc HSS réalise les fonctions d'un HSS LTE de l'art antérieur.

Le bloc HSS 5 comporte une liste définissant les UEs, réels et virtuels, autorisés. Cette liste des UEs autorisés comporte en réalité, dans le cas considéré, les clés cryptographiques associées aux cartes SIMs.

Cette liste comporte l'ensemble des clés des UEs réels du réseau autorisés à communiquer, et l'ensemble des clés des UEs virtuels autorisés à communiquer et susceptibles d'être instanciés par des e2NBs du réseau qui se trouveraient au sein de la couverture radio de l'e2NB considéré.

La procédure d'authentification spécifiée dans le protocole LTE (en anglais Section « Authentication and Key Agreement », dite AKA) permet au bloc MME 4, agissant en tant que MME avec l'aide du bloc HSS 5 agissant en tant que HSS, de procéder à l'authentification.

### Routeur

Le routeur 6 est adapté pour recevoir des paquets de données reçus par un élément de l'e2NB (un vUE de l'ensemble 2 ou le bloc eNB1), pour détecter, en fonction de règles de routage qui lui sont fournies par l'unité de gestion 3, à quel élément de l'e2NB (parmi lesquels les vUEs de l'ensemble 2 et le bloc eNB1) ou à quelle interface de l'e2NB (par exemple une connexion externe de type Ethernet) un paquet reçu doit être relayé ou délivré en tant que destinataire final, en fonction de l'élément de l'e2NB ou de l'interface de l'e2NB (par exemple une connexion externe de type Ethernet) qui l'a remis au routeur 6 et/ou du destinataire final du paquet.

Dans l'architecture LTE de l'art antérieur, la passerelle P-GW (en anglais « Packet Gateway ») sert de terminaison pour les flux utilisateur ainsi que de routeur afin de diriger ceux-ci vers d'autres réseaux ou sur le réseau de l'opérateur. Mais la connexion entre eNB et P-GW ajoute une couche protocolaire (et la charge associée) afin de traverser de manière transparente les éléments réseaux entre l'eNB et la P-GW, or le e2NB est une entité « tout-en-un » avec des éléments co-localisés et ne nécessite pas un tel mécanisme. Ainsi, les S-GW et P-GW ne sont pas implémentées dans l'e2NB dans le mode de réalisation particulier décrit ci-dessus afin de simplifier le fonctionnement, mais pourraient l'être en cas de besoin spécifique.

Les échanges mis en oeuvre par les éléments référencés 1 à 6 de l'e2NB dans le cadre de leur fonctionnement selon l'invention tel que décrit ci-dessus comportent notamment les échanges décrits ci-dessous en référence à la figure 2.

Un vUE de l'ensemble 2 de vUE(s) met en oeuvre des échanges 100 par voie radiofréquence avec les e2NBs voisins, parmi lesquels les procédures d'attachement à un e2NB voisin, la réception radiofréquence de paquets de données envoyés par l'e2NB voisin auquel le vUE est attaché et l'émission radiofréquence par le vUE de paquets de données qu'il émet, via les ressources physiques (temps/fréquence) qui lui sont allouées par son e2NB d'attachement.

Le bloc eNB 1 met en oeuvre des échanges 101 par voie radiofréquence avec les UEs réels et virtuels voisins, parmi lesquels les procédures d'attachement à un e2NB voisin, la réception radiofréquence de paquets de données émis par un UE qui lui est attaché sur la liaison ascendante qui lui est affectée, l'émission radiofréquence par le bloc eNB 1 de paquets de données qu'il émet vers un UE qui lui est attaché, sur la voie descendante allouée à cet UE.

L'ensemble 2 de vUEs met en oeuvre des échanges 103 avec l'unité de gestion 3, comprenant :
- l'indication, par chaque vUE à l'unité de gestion 3, des eNBs voisins détectés, attachés, de besoins de ressources en émission, en réception ;
- les échanges nécessaires pour instancier par l'unité de gestion 3 un nouvel vUE ;
- la fourniture d'une liste blanche et d'une liste noire à chaque vUE par l'unité de gestion 3 ;
- l'attribution à un vUE par l'unité de gestion 3 de ressources fréquentielles et temporelles pour l'utilisation de la chaîne de traitement radio (donnant lieu le cas échéant, en LTE, à un multiplexage fréquentiel et temporel) ;
- la fourniture par l'unité de gestion 3 à chaque vUE d'un service de type SIM.

Le bloc eNB 1 met en oeuvre des échanges 104 avec le bloc MME 4 et le bloc MME 4 met en oeuvre des échanges 105 avec le bloc HSS 5 conformément à la procédure AKA pour une opération d'attachement.

Le bloc eNB 1 met en oeuvre des échanges 106 avec le routeur 6 comprenant :
- la fourniture de paquets IP par le bloc eNB 1 au routeur 6 et la fourniture de paquets IP par le routeur 6 au bloc eNB 1 ;

Le routeur 6 met en oeuvre avec l'unité de gestion 3 des échanges 107 comprenant :
- la fourniture par l'unité de gestion 3 au routeur 6 des règles de routage ;
- la fourniture de paquets IP au routeur 6 par l'unité de gestion 3 et la fourniture de paquets IP par le routeur 6 à l'unité de gestion 3 (par exemple à destination des autres unités de gestion d'autres e2NBs pour l'échange d'informations).

Le routeur 6 met en oeuvre avec l'ensemble 2 de vUE(s) des échanges 109 comprenant la fourniture de paquets IP au routeur 6 par les vUE(s) et la fourniture de paquets IP par le routeur 6 aux vUEs.

L'unité de gestion 3 met en oeuvre des échanges 108 avec le bloc eNB 1 comprenant :
- l'attribution à l'eNB 1 par l'unité de gestion 3 de ressources fréquentielles et temporelles pour l'utilisation de la chaîne de traitement radio (ou des chaînes de traitement radio dans les modes de réalisation où l'e2NB comporte plusieurs chaînes de traitement radio) ;
- l'indication par le bloc eNB 1 à l'unité de gestion 3 des UEs réels et virtuels qui sont actuellement attachés à l'e2NB ;
- l'indication, par le bloc eNB 1 à l'unité de gestion, de ses besoins actuels de ressources en émission, en réception.

Le routeur 6 met en oeuvre avec une ou des interfaces externes du e2NB telles qu'une interface avec un réseau Ethernet, des échanges 110 comprenant la fourniture et la réception de paquets IP.

Le bloc MME 4 met en oeuvre avec l'unité de gestion 3 des échanges 111 relatifs aux paramètres et listes d'adresses IPs que le bloc MME 4 donne aux UEs qui se connectent sur la base de règles d'adressage IP que l'unité de gestion 3 fournit préalablement au bloc MME 4.

Les moyens de communications entre bâtiments d'une flotte sont stratégiques pour maintenir le contrôle et le partage de l'information en temps réel entre les différentes forces et permettre une prise de décision rapide face aux évènements rencontrés.

La capacité d'établissement d'un canal de communication robuste, fiable et à faible latence entre différents acteurs tels que des bâtiments de surface, des drones de surface ou aérien, est un point clé du succès d'une opération.

L'invention propose un nouveau concept de stations de base (e2NodeB), permettant la communication haut débit conformément au protocole LTE de manière classique avec des terminaux UE, modifiées afin de permettre des communications directement entre elles également selon le protocole radio LTE, en utilisant les mêmes ressources matérielles (chaîne de traitement radio notamment) que celles dont elles disposent pour échanger avec les UE réels.

Les bâtiments équipés chacun d'e2NB selon l'invention peuvent ainsi fournir un service de communication à leurs utilisateurs mobiles tout en permettant aux bâtiments de se connecter les uns aux autres et d'établir un réseau maillé de e2NBs.

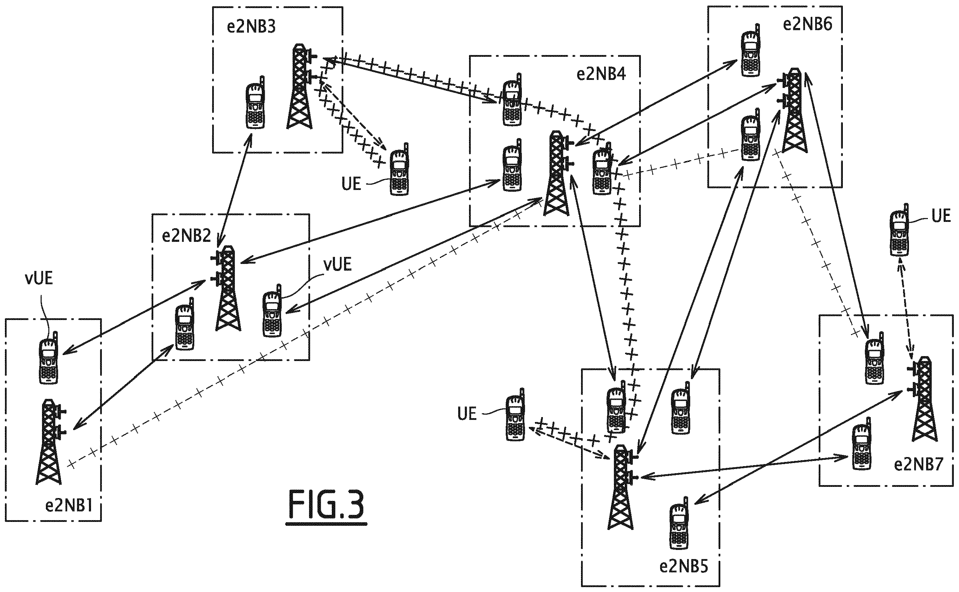

La figure 3 est une vue d'un réseau maillé comportant des e2NBs selon l'invention connectés entre eux via des UE virtuels.

Ce réseau maillé au moment considéré comporte 7 e2NBs similaires à celui présenté en figure 2 : e2NB1, e2NB2, e2NB3, e2NB4, e2NB5, e2NB6 et e2NB7.

Les e2NBs sont par exemple installés sur des bâtiments tels que des navires respectifs. Les terminaux réels sont par exemple détenus par des utilisateurs mobiles qui peuvent se rendre de bâtiment en bâtiment, ou quitter les bâtiments par des embarcations autres.

Chaque e2NB est représenté schématiquement par un rectangle en pointillé comportant un bloc eNB et un ou des terminaux virtuels.

Ainsi l'e2NB1 comporte un terminal virtuel, l'e2NB2 comporte deux terminaux virtuels. Les liaisons radiofréquences issues de l'attachement d'un e2NB à un terminal virtuel voisin sont représentées en trait plein, tandis que les liaisons issues de l'attachement entre un UE réel et un e2NB sont représentées en pointillés.

Les e2NBs se connectent ainsi dynamiquement les uns aux autres via leurs vUEs créant ainsi un réseau maillé sans fil permettant des communications entre e2NBs, entre UEs rattachés à ces eNBs, et entre eNBs et UEs.

Lorsque deux e2NBs sont à portée radio l'une de l'autre, des liaisons ont été créées entre elles : il est nécessaire que deux e2NB se trouvent localisés l'un par rapport à l'autre de sorte que chacun se trouve dans la couverture radio de l'autre pour que ces deux e2NBs se connectent l'un à l'autre via un vUE.

Parfois les liaisons entre e2NBs sont doublées : par exemple un terminal virtuel de e2NB4 est attaché à l'e2NB6 et symétriquement un terminal virtuel de e2NB6 est attaché à l'e2NB4.

Dans un tel réseau maillé, une communication est mise en oeuvre comprenant le transport de paquets de données le long du trajet repéré par des signes « + », entre l'UE réel attaché à l'e2NB3 et l'UE réel attaché à l'e2NB5, via les éléments suivants :
- du UE réel attaché au bloc eNB de l'e2NB3, puis
- du bloc eNB de l'e2NB3 via le routeur de e2NB3 au terminal virtuel de l'e2NB4 attaché à l'e2NB3,
- du terminal virtuel de l'e2NB4 attaché à l'e2NB3 au bloc eNB du e2NB4 via le routeur du e2NB4,
- du bloc eNB du e2NB4 au terminal virtuel de l'e2NB5 attaché à l'e2NB4,
- du terminal virtuel de l'e2NB5 attaché à l'e2NB4 au bloc eNB de l'e2NB5 via le routeur de e2NB5,
- du bloc eNB de l'e2NB5 à l'UE réel attaché à l'e2NB5, via le routeur de e2NB5.

Bien entendu, le routeur dans chaque e2NB comporte des tables de routage. Dans un mode de réalisation, une table de routage au sein d'un e2NB comporte une liste d'adresses, correspondant à des adresses de destination au sein du réseau ; cette table de routage indique pour chaque adresse de la liste, vers quel élément de l'e2NB (unité de gestion, vUE, bloc eNB, interface Ethernet...) le routeur doit router un paquet de données dont l'adresse de destination correspond à cette adresse. Les adresses de destination peuvent être des adresses d'UEs réels, d'UEs virtuels, d'unité de gestion, de blocs eNB, d'interfaces Ethernet etc. La table indique par exemple en outre un identifiant de masque (lorsque l'élément de l'e2NB vers lequel router est l'unité de gestion, un vUE, le bloc eNB) ou encore un identifiant de passerelle (lorsque l'élément de l'e2NB vers lequel router est une interface externe).

Une autre communication est par exemple mise en oeuvre, comprenant le transport de paquets de données le long du trajet repéré par la succession des signes « + » et « - », depuis un réseau externe interfacé à l'e2NB1 à destination d'un réseau externe interfacé à l'e2NB7 via les éléments suivants :
- du réseau externe interfacé à e2NB1, via le routeur du e2NB1, au bloc eNB de l'e2NB1,
- du bloc eNB de l'e2NB1 au vUE dans l'e2NB2 qui est attaché à l'e2NB1,
- du vUE dans l'e2NB2 qui est attaché à l'e2NB1, via le routeur, au vUE dans l'e2NB2 qui est attaché à l'e2NB4,
- du vUE dans l'e2NB2 qui est attaché à l'e2NB4 au bloc eNB de l'e2NB4,
- du bloc eNB de l'e2NB4, via le routeur du e2NB4, au vUE de e2NB4 qui est attaché au e2NB6,
- du vUE de e2NB4 qui est attaché au e2NB6, au bloc eNB du e2NB6,
- du bloc eNB du e2NB6, via le routeur du e2NB6, au bloc eNB du e2NB6,
- du bloc eNB du e2NB6 au vUE de e2NB7 attaché à l'e2NB6,
- du vUE de e2NB7 attaché à l'e2NB6 au routeur du e2NB7, puis du routeur de e2NB7 à l'interface externe de l'e2NB7.

Le concept n'est pas bien sûr pas limité à une utilisation navale et son utilisation à terre est tout aussi avantageuse.

L'invention a été décrite ci-dessus plus particulièrement relativement à un protocole radio LTE, mais peut bien sûr être mise en oeuvre relativement à d'autres protocoles radio.

Dans le mode de réalisation particulier décrit ci-dessus, l'e2NB comprenait un bloc eNB 1, un ensemble 2 de vUE(s), une unité de gestion 3, un bloc MME 4, un bloc HSS 5 et un routeur 6. Dans un autre mode de réalisation de l'invention des e2NB, des communications/connexions (notamment physique et des premières couches LTE) entre stations de base e2NB sont établies sans utiliser de bloc MME et/ou de bloc HSS et/ou de routeur, mais seulement avec le bloc eNB, les vUEs et l'unité de gestion (le routage est par exemple dans un tel cas directement mis en oeuvre au niveau du bloc eNB, dans des couches plus basses que la couche IP).

## Revendications

1. Station de base (e2NB) pour un réseau de radiocommunications comprenant un ensemble de stations de base et des premiers terminaux utilisateurs,
ladite station de base comprenant :
- un module d'interface radio adapté pour émettre et recevoir des données radiofréquences ; et
- un bloc pilote (eNB 1) adapté pour établir une liaison de communication et communiquer sur ladite liaison avec au moins un premier terminal utilisateur conformément à un protocole radio comprenant une section de protocole radio propre aux stations de base et une section de protocole radio propre aux terminaux utilisateurs, en utilisant ledit module d'interface radio,
ladite station de base étant **caractérisée en ce qu'**elle comprend en outre une unité de gestion (3) adaptée pour créer une pluralité de seconds terminaux utilisateurs (vUEs), lesdits seconds terminaux utilisateurs créés étant des terminaux utilisateurs virtuels adaptés pour communiquer conformément audit protocole radio avec des stations de base voisines de ladite station de base, en utilisant ledit module d'interface radio.

2. Station de base (e2NB) selon la revendication 1, dans laquelle l'unité de gestion (3) est adaptée pour répartir sélectivement l'utilisation du module d'interface radio entre le bloc pilote (eNB 1), pour la communication entre ledit bloc pilote (eNB 1) et l'au moins un premier terminal utilisateur, et les seconds terminaux virtuels pour leur communication avec des stations de base voisines.

3. Station de base (e2NB) selon la revendication 1 ou 2, dans laquelle l'unité de gestion (3) affecte à chaque second terminal virtuel un identifiant respectif.

4. Station de base (e2NB) selon l'une quelconque des revendications précédentes, dans laquelle ledit protocole de communication est conforme à la norme LTE.

5. Station de base (e2NB) selon l'une quelconque des revendications précédentes, dans laquelle un second terminal utilisateur virtuel est adapté pour effectuer régulièrement un balayage radio et pour détecter des stations de base voisines et pour indiquer à l'unité de gestion lesdites stations voisines détectées,
ladite unité de gestion étant adaptée pour, lorsqu'une des stations de base voisines détectées ne fait pas partie des stations de base voisines ayant une liaison établie avec les seconds terminaux virtuels, créer un nouveau second terminal virtuel pour la mise en oeuvre de communications entre ledit nouveau second terminal virtuel et ladite station de base voisine détectée.

6. Station de base (e2NB) selon l'une quelconque des revendications précédentes, comportant un bloc de gestion de mobilité (MME 4) et une base (HSS 5) d'informations d'authentification relatives aux premiers et seconds terminaux utilisateurs, ledit bloc de gestion de mobilité (MME 4) étant adapté pour, lorsque le bloc pilote (eNB 1) reçoit, en provenance d'un premier terminal utilisateur, une requête de mise en oeuvre d'une liaison de communication avec ladite station de base conforme audit protocole de communication, procéder à l'authentification dudit premier terminal utilisateur en fonction d'éléments d'authentification indiqués dans la requête et des informations d'authentification dans la base relatives audit premier terminal utilisateur ;
et dans laquelle l'unité de gestion (3) est adaptée, lorsqu'elle crée un second terminal utilisateur virtuel, pour fournir audit second terminal utilisateur virtuel, des éléments d'authentification propres audit second terminal virtuel,
chaque second terminal virtuel étant adapté pour, lorsqu'il émet une requête de mise en oeuvre d'une liaison de communication à destination d'une station de base voisine conformément audit protocole de communication, insérer, dans ladite requête, lesdits éléments d'authentification fournis par l'unité de gestion.

7. Station de base (e2NB) selon l'une quelconque des revendications précédentes, dans laquelle l'unité de gestion (3) est adaptée pour stocker une liste des stations de base voisines connectées à ladite station de base, et
- chaque second terminal virtuel est adapté pour indiquer à l'unité de gestion la station de base voisine avec laquelle il a une liaison de communication courante établie, et l'unité de gestion est adaptée pour actualiser la liste des stations de base voisines connectées à ladite station de base, en insérant dans la liste, ladite station de base voisine indiquée, mise en correspondance, dans la liste, avec ledit second terminal virtuel ;
- le bloc pilote (eNB 1) est adapté pour indiquer à l'unité de gestion lesdits premiers terminaux avec lesquels il a établi une liaison de communication courante, et lorsque un desdits premiers terminaux est un terminal virtuel d'une station de base voisine de ladite station de base, l'unité de gestion est adaptée pour actualiser la liste en y insérant ladite station de base voisine mise en correspondance, dans la liste, avec ledit premier terminal virtuel.

8. Station de base (e2NB) selon la revendication 7, comprenant un routeur (6) et dans laquelle l'unité de gestion (3) est adaptée pour actualiser des règles de routage en fonction de ladite liste actualisée des stations de base voisines connectées à ladite station de base, ledit routeur étant adapté pour router, en fonction de règles de routage actualisées par l'unité de gestion, des données sélectivement vers le bloc pilote pour émission vers des premiers terminaux utilisateurs ou vers des seconds terminaux virtuels pour émission vers des stations de base voisines.

9. Procédé de traitement dans une station de base (e2NB) pour un réseau de radiocommunications comprenant un ensemble de stations de base et des premiers terminaux utilisateurs, ladite station de base comprenant un module d'interface radio et un bloc pilote (eNB 1), comprenant les étapes suivantes :
- émission et réception de données radiofréquences par le module d'interface radio adapté ; et
- établissement d'une liaison de communication par le bloc pilote (eNB 1) et communication par le bloc pilote (eNB 1) sur ladite liaison avec au moins un premier terminal utilisateur conformément à un protocole radio comprenant une section de protocole radio propre aux stations de base et une section de protocole radio propre aux terminaux utilisateurs, en utilisant ledit module d'interface radio,
ledit procédé étant **caractérisé en ce qu'**il comprend une étape de création, par une unité de gestion (3) de ladite station de base, d'une pluralité de seconds terminaux utilisateurs (vUEs) virtuels adaptés pour communiquer conformément audit protocole radio avec des stations de base voisines de ladite station de base, en utilisant ledit module d'interface radio.

10. Procédé de traitement dans une station de base (e2NB), selon la revendication 9, comprenant une étape de répartition sélective, par l'unité de gestion (3), de l'utilisation du module d'interface radio entre le bloc pilote (eNB 1), pour la communication entre ledit bloc pilote (eNB 1) et l'au moins un premier terminal utilisateur, et les seconds terminaux virtuels pour leur communication avec des stations de base voisines.

11. Procédé de traitement dans une station de base (e2NB) selon la revendication 9 ou 10, selon lequel l'unité de gestion (3) affecte à chaque second terminal virtuel un identifiant respectif.

12. Procédé de traitement dans une station de base (e2NB) selon l'une quelconque des revendications 9 à 11, selon lequel ledit protocole de communication est conforme à la norme LTE.

13. Procédé de traitement dans une station de base (e2NB) selon l'une quelconque des revendications 9 à 12, selon lequel un second terminal utilisateur virtuel effectue régulièrement un balayage radio, détecte des stations de base voisines et indique à l'unité de gestion lesdites stations voisines détectées,
et selon lequel lorsqu'une des stations de base voisines détectées ne fait pas partie des stations de base voisines ayant une liaison établie avec les seconds terminaux virtuels, ladite unité de gestion crée un nouveau second terminal virtuel pour la mise en oeuvre de communications entre ledit nouveau second terminal virtuel et ladite station de base voisine détectée.

14. Procédé de traitement dans une station de base (e2NB) selon l'une quelconque des revendications 9 à 13, selon lequel, lorsque le bloc pilote (eNB 1) reçoit, en provenance d'un premier terminal utilisateur, une requête de mise en oeuvre d'une liaison de communication avec ladite station de base conforme audit protocole de communication, un bloc de gestion de mobilité (MME 4) de la station de base procède à l'authentification dudit premier terminal utilisateur en fonction d'éléments d'authentification indiqués dans la requête et des informations d'authentification relatives audit premier terminal utilisateur et stockées dans une base (HSS 5) de la station de base comprenant des informations d'authentification relatives aux premiers et seconds terminaux utilisateurs;
selon lequel l'unité de gestion (3), lorsqu'elle crée un second terminal utilisateur virtuel, fournit audit second terminal utilisateur virtuel, des éléments d'authentification propres audit second terminal virtuel,
chaque second terminal virtuel, lorsqu'il émet une requête de mise en oeuvre d'une liaison de communication à destination d'une station de base voisine conformément audit protocole de communication, insère, dans ladite requête, lesdits éléments d'authentification fournis par l'unité de gestion.

15. Procédé de traitement dans une station de base (e2NB) selon l'une quelconque des revendications 9 à 14, selon lequel l'unité de gestion (3) stocke une liste des stations de base voisines connectées à ladite station de base, et
- chaque second terminal virtuel indique à l'unité de gestion la station de base voisine avec laquelle il a une liaison de communication courante établie, et l'unité de gestion actualise la liste des stations de base voisines connectées à ladite station de base, en insérant dans la liste, ladite station de base voisine indiquée, mise en correspondance, dans la liste, avec ledit second terminal virtuel ;
- le bloc pilote (eNB 1) indique à l'unité de gestion lesdits premiers terminaux avec lesquels il a établi une liaison de communication courante, et lorsqu'un desdits premiers terminaux est un terminal virtuel d'une station de base voisine de ladite station de base, l'unité de gestion actualise la liste en y insérant ladite station de base voisine mise en correspondance, dans la liste, avec ledit premier terminal virtuel.

16. Procédé de traitement dans une station de base (e2NB) selon la revendication 15, selon lequel l'unité de gestion (3) actualise des règles de routage en fonction de ladite liste actualisée des stations de base voisines connectées à ladite station de base, et un routeur de la station de base route, en fonction de règles de routage actualisées par l'unité de gestion, des données sélectivement vers le bloc pilote pour émission vers des premiers terminaux utilisateurs ou vers des seconds terminaux virtuels pour émission vers des stations de base voisines.

## Patentansprüche

1. Basisstation (e2NB) für ein Funkkommunikationsnetz, umfassend eine Mehrzahl Basisstationen und erste Benutzerendgeräte;
wobei die Basisstation umfasst:
- ein Funkschnittstellenmodul, das zum Senden und Empfangen von Radiofrequenzdaten geeignet ist; und
- eine Steuereinheit (eNB1), die zur Herstellung einer Kommunikationsverbindung und zum Kommunizieren unter Verwendung des Funkschnittstellenmoduls auf der Kommunikationsverbindung mit mindestens einem ersten Benutzerendgerät gemäß einem Funkprotokoll geeignet ist, das einen für Basisstationen bestimmten Funkprotokollabschnitt und einen für Benutzerendgeräte bestimmten Funkprotokollabschnitt umfasst;
wobei die Basisstation **dadurch gekennzeichnet ist, dass** sie ferner eine Kontrolleinheit (3) umfasst, die dazu geeignet ist, eine Mehrzahl zweiter Benutzerendgeräte (vUEs) zu erstellen, wobei die zweiten Benutzerendgeräte virtuelle Benutzerendgeräte sind, die dazu geeignet sind, gemäß dem Funkprotokoll mit benachbarten Basisstationen der Basisstation unter Verwendung des Funkschnittstellenmoduls zu kommunizieren.

2. Basisstation (e2NB) nach Anspruch 1, wobei die Kontrolleinheit (3) dazu geeignet ist, die Nutzung des Funkschnittstellenmoduls einzuteilen zwischen der Steuerungseinheit (eNB1) zur Kommunikation zwischen der Steuerungseinheit (eNB1) und dem mindestens einen ersten Benutzerendgerät und den zweiten virtuellen Endgeräten zur Kommunikation mit benachbarten Basisstationen.

3. Basisstation (e2NB) nach Anspruch 1 oder 2, wobei die Kontrolleinheit (3) jedem zweiten virtuellen Endgerät eine jeweilige Kennung zuweist.

4. Basisstation (e2NB) nach einem der vorstehenden Ansprüche, wobei das Kommunikationsprotokoll der LTE-Norm entspricht.

5. Basisstation (e2NB) nach einem der vorstehenden Ansprüche, wobei ein zweites virtuelles Benutzerendgerät dazu geeignet ist, in regelmäßigen Abständen einen Funkscan durchzuführen und benachbarte Basisstationen zu erkennen und der Kontrolleinheit die erkannten benachbarten Basisstationen mitzuteilen,
wobei die Kontrolleinheit dazu geeignet ist, ein neues zweites virtuelles Endgerät zwecks Kommunikationen zwischen dem neuen zweiten virtuellen Endgerät und der erkannten benachbarten Basisstation zu erstellen, wenn eine der erkannten benachbarten Basisstationen nicht zu den benachbarten Basisstationen gehören, die mit den zweiten virtuellen Endgeräten in Verbindung stehen.

6. Basisstation (e2NB) nach einem der vorstehenden Ansprüche, umfassend eine Mobilitätsmanagementeinheit (MME4) und eine Datenbank (HSS5) mit Authentifizierungsdaten über die ersten und zweiten Benutzerendgeräte, wobei die Mobilitätsmanagementeinheit (MME4) dazu geeignet ist, bei Empfang einer Aufforderung zur Herstellung einer Kommunikationsverbindung mit der Basisstation gemäß dem Kommunikationsprotokoll von einem ersten Benutzerendgerät durch die Steuerungseinheit (eNB1) das erste Benutzerendgerät anhand der in der Aufforderung enthaltenen Authentifizierungsdaten und der in der Datenbank enthaltenen Authentifizierungsdaten über das erste Benutzerendgerät zu authentifizieren;
und wobei die Kontrolleinheit (3) dazu geeignet ist, bei der Erstellung eines zweiten virtuellen Benutzerendgeräts dem zweiten virtuellen Endgerät Authentifizierungsdaten über das zweite virtuelle Endgerät bereitzustellen,
wobei jedes zweite virtuelle Endgerät dazu geeignet ist, bei Absenden einer Aufforderung zur Herstellung einer Kommunikationsverbindung an eine benachbarte Basisstation gemäß dem Kommunikationsprotokoll die von der Kontrolleinheit bereitgestellten Authentifizierungsdaten in die Aufforderung aufzunehmen.

7. Basisstation (e2NB) nach einem der vorstehenden Ansprüche, wobei die Kontrolleinheit (3) dazu geeignet ist, eine Liste mit benachbarten Basisstationen, die mit der Basisstation verbunden sind, zu speichern, und
- jedes zweite virtuelle Endgerät dazu geeignet ist, der Kontrolleinheit die benachbarte Basisstation mitzuteilen, mit der es derzeit eine Kommunikationsverbindung unterhält, und wobei die Kontrolleinheit dazu geeignet ist, die Liste der mit der Basisstation verbundenen benachbarten Basisstationen zu aktualisieren, indem sie die angegebene Basisstation dem zweiten virtuellen Endgerät in der Liste zuordnet,
- wobei die Steuerungseinheit (eNB1) dazu geeignet ist, der Kontrolleinheit gegenüber die ersten Endgeräte anzugeben, mit der sie derzeit eine Kommunikationsverbindung unterhält, und, wenn eines der ersten Endgeräte ein virtuelles Endgerät einer benachbarten Basisstation der Basisstation ist, die Kontrolleinheit dazu geeignet ist, die Liste zu aktualisieren, indem sie die benachbarte Basisstation dem ersten virtuellen Endgerät in der Liste zuzuordnen.

8. Basisstation (e2NB) nach Anspruch 7, umfassend einen Router (6), und wobei die Kontrolleinheit (3) dazu geeignet ist, Routing-Regeln in Abhängigkeit von der aktualisierten Liste der mit der Basisstation verbundenen benachbarten Basisstationen zu aktualisieren, wobei der Router dazu geeignet ist, gemäß den von der Kontrolleinheit aktualisierten Routing-Regeln Daten wahlweise an die Steuerungseinheit zum Absenden an erste Benutzerendgeräte oder an die zweiten virtuellen Endgeräte zum Absenden an benachbarte Basisstationen zu leiten.

9. Verarbeitungsverfahren für ein Funkkommunikationsnetz, umfassend eine Mehrzahl Basisstationen und erste Benutzerendgeräte, in einer Basisstation (e2NB), wobei die Basisstation ein Funkschnittstellenmodul und eine Steuerungseinheit (eNB1) umfasst, wobei das Verfahren die Schritte umfasst:
- Senden und Empfangen von Radiofrequenzdaten durch das angepasste Funkschnittstellenmodul und
- Herstellen einer Kommunikationsverbindung durch die Steuerungseinheit (eNB1) und Kommunizieren durch die Steuerungseinheit (ENB1) unter Verwendung des Funkschnittstellenmoduls auf der Kommunikationsverbindung mit mindestens einem ersten Benutzerendgerät gemäß einem Funkprotokoll, das einen für Basisstationen bestimmten Funkprotokollabschnitt und einen für Benutzerendgeräte bestimmten Funkprotokollabschnitt umfasst;
wobei das Verfahren **dadurch gekennzeichnet ist, dass** es einen Schritt des Erstellens einer Mehrzahl zweiter virtueller Benutzerendgeräte (vUEs) durch eine Kontrolleinheit (3) der Basisstation umfasst, wobei die zweiten virtuellen Benutzerendgeräte dazu geeignet sind, gemäß dem Funkprotokoll mit benachbarten Basisstationen der Basisstation unter Verwendung des Funkschnittstellenmoduls zu kommunizieren.

10. Verfahren zur Verarbeitung in einer Basisstation (e2NB) nach Anspruch 9, umfassend einen Schritt des selektiven Einteilens der Nutzung des Funkschnittstellenmoduls durch die Kontrolleinheit (3) zwischen der Steuerungseinheit (eNB1) zur Kommunikation zwischen der Steuerungseinheit (eNB1) und dem mindestens einen ersten Benutzerendgerät und den zweiten virtuellen Endgeräten zur Kommunikation mit benachbarten Basisstationen.

11. Verfahren zur Verarbeitung in einer Basisstation (e2NB) nach Anspruch 9 oder 10, wobei die Kontrolleinheit (3) jedem zweiten virtuellen Endgerät eine jeweilige Kennung zuweist.

12. Verfahren zur Verarbeitung in einer Basisstation (e2NB) nach einem der Ansprüche 9 - 11, wobei das Kommunikationsprotokoll der LTE-Norm entspricht.

13. Verfahren zur Verarbeitung in einer Basisstation (e2NB) nach einem der Ansprüche 9 - 12, wobei ein zweites virtuelles Benutzerendgerät in regelmäßigen Abständen einen Funkscan durchführt, benachbarte Basisstationen erkennt und die erkannten benachbarten Basisstationen der Kontrolleinheit mitteilt
und wobei die Kontrolleinheit ein neues zweites virtuelles Endgerät zwecks Kommunikationen zwischen dem neuen zweiten virtuellen Endgerät und der erkannten benachbarten Basisstation erstellt, wenn eine der erkannten benachbarten Basisstationen nicht zu den benachbarten Basisstationen gehören, die mit den zweiten virtuellen Endgeräten in Verbindung stehen.

14. Verfahren zur Verarbeitung in einer Basisstation (e2NB) nach einem der Ansprüche 9 - 13, wobei, wenn bei Empfang einer Aufforderung zur Herstellung einer Kommunikationsverbindung mit der Basisstation gemäß dem Kommunikationsprotokoll von einem ersten Benutzerendgerät durch die Steuerungseinheit (eNB1), eine Mobilitätsmanagementeinheit (MME4) der Basisstation das erste Benutzerendgerät anhand der in der Aufforderung enthaltenen Authentifizierungsdaten und der in einer Daten über das erste Benutzerendgerät umfassenden Datenbank (HSS 5) gespeicherten Authentifizierungsdaten über das erste Benutzerendgerät authentifiziert,
wobei die Kontrolleinheit (3) bei der Erstellung eines zweiten virtuellen Benutzerendgeräts dem zweiten virtuellen Endgerät Authentifizierungsdaten über das zweite virtuelle Endgerät bereitstellt,
wobei jedes zweite virtuelle Endgerät bei Absenden einer Aufforderung zur Herstellung einer Kommunikationsverbindung an eine benachbarte Basisstation gemäß dem Kommunikationsprotokoll die von der Kontrolleinheit bereitgestellten Authentifizierungsdaten in die Aufforderung aufnimmt.

15. Verfahren zur Verarbeitung in einer Basisstation (e2NB) nach einem der Ansprüche 9-14, wobei die Kontrolleinheit (3) eine Liste der mit der Basisstation verbundenen benachbarten Basisstationen speichert und
- jedes zweite virtuelle Endgerät der Kontrolleinheit die benachbarte Basisstation mitteilt, mit der es derzeit eine Kommunikationsverbindung unterhält, und wobei die Kontrolleinheit die Liste der mit der Basisstation verbundenen benachbarten Basisstationen aktualisiert, indem sie die angegebene Basisstation dem zweiten virtuellen Endgerät in der Liste zuordnet,
- wobei die Steuerungseinheit (eNB1) der Kontrolleinheit gegenüber die ersten Endgeräte angibt, mit der sie derzeit eine Kommunikationsverbindung unterhält, und, wenn eines der ersten Endgeräte ein virtuelles Endgerät einer benachbarten Basisstation der Basisstation ist, die Kontrolleinheit die Liste aktualisiert, indem sie die benachbarte Basisstation dem ersten virtuellen Endgerät in der Liste zuordnet.

16. Verfahren zur Verarbeitung in einer Basisstation (e2NB) nach Anspruch 15, wobei die Kontrolleinheit (3) Routing-Regeln in Abhängigkeit von der aktualisierten Liste der mit der Basisstation verbundenen benachbarten Basisstationen aktualisiert, und ein Router der Basisstation gemäß den von der Kontrolleinheit aktualisierten Routing-Regeln Daten wahlweise an die Steuerungseinheit zum Absenden an erste Benutzerendgeräte oder an die zweiten virtuellen Endgeräte zum Absenden an benachbarte Basisstationen leitet.

## Claims

1. A base station (e2NB) for a radiocommunications network comprising an assembly of base stations and of first user terminals,
said base station comprising:
- a radio interface module adapted for emitting and receiving radiofrequency data; and
- a control block (eNB 1) adapted for establishing a communication link and communicating over said link with at least one first user terminal according to a radio protocol comprising a radio protocol section specific to the base stations and a radio protocol section specific to the user terminals, by using said radio interface module,
said base station being **characterized in that** it further comprises a management unit (3) adapted for generating a plurality of second user terminals (vUEs), said second user terminals generated being virtual user terminals adapted for communicating according to said radio protocol with neighboring base stations of said base station, by using said radio interface module.

2. The base station (e2NB) according to claim 1, wherein the management unit (3) is adapted for selectively distributing the use of the radio interface module between the control block (eNB 1), for the communication between said control block (eNB 1) and said at least one first user terminal, and the second virtual terminals for their communication with neighboring base stations.

3. The base station (e2NB) according to claim 1 or 2, wherein the management unit (3) assigns to each second virtual terminal a respective identifier.

4. The base station (e2NB) according to any of the preceding claims, wherein said communication protocol is compliant with the LTE standard.

5. The base station (e2NB) according to any of the preceding claims, wherein a second user virtual terminal is adapted for regularly carrying out a radio scan and for detecting the neighboring base stations and for indicating to the management unit said detected neighboring stations,
said management unit being adapted for, when one of the detected neighboring base stations is not part of the neighboring base stations having a link established with the second virtual terminals, generating a new second virtual terminal for applying communications between said new second virtual terminal and said detected neighboring base station.

6. The base station (e2NB) according to any of the preceding claims, including a mobility management block (MME 4) and a base (HSS 5) of authentication information relative to the first and second user terminals, said mobility management block (MME 4) being adapted for, when the control block (eNB 1) receives, from a first user terminal, a request for applying a communication link with said base station according to said communication protocol, for proceeding with the authentication of said first user terminal according to authentication elements indicated in the request and authentication information in the base relative to said first user terminal;
and wherein the management unit (3) is adapted, when it generates a second virtual user terminal, for providing to said second virtual user terminal, authentication elements specific to said second virtual terminal,
each second virtual terminal being adapted for, when it emits a request for applying a communication link intended for a neighboring base station according to said communication protocol, inserting, in said request, said authentication elements provided by the management unit.

7. The base station (e2NB) according to any of the preceding claims, wherein the management unit (3) is adapted for storing a list of the neighboring base stations connected to said base station, and
- each second virtual terminal is adapted for indicating to the management unit the neighboring base station with which it has an established current communication link, and the management unit is adapted for updating the list of neighboring base stations connected to said base station, by inserting into the list, said neighboring base station indicated, matched, in the list, with said second virtual terminal;
- the control block (eNB 1) is adapted for indicating to the management unit said first terminals with which it has established a current communication link, and when one of said first terminals is a virtual terminal of a neighboring base station of said base station, the management unit is adapted for updating the list by inserting therein said neighboring base station matched in the list, with said first virtual terminal.

8. The base station (e2NB) according to claim 7, comprising a router (6) and wherein the management unit (3) is adapted for updating routing rules according to said updated list of the neighboring base stations connected to said base station, said router being adapted for routing, according to routing rules updated by the management unit, selectively data towards the control block for emission towards the first user terminals or towards the second virtual terminals for emission towards neighboring base stations.

9. A treatment method in a base station (e2NB) for a radiocommunications network comprising an assembly of base stations and of first user terminals, said base station comprising a radio interface module and a control block (eNB 1), comprising the following steps:
- emission and reception of radiofrequency data by the adapted radio interface module; and
- establishment of a communication link by the control block (eNB 1) and communication by the control block (eNB 1) over said link with at least one first user terminal according to a radio protocol comprising a radio protocol section specific to the base stations and a radio protocol section specific to the user terminals, by using said radio interface module,
said method being **characterized in that** it comprises a step for generating, by a management unit (3) of said base station, a plurality of virtual second user terminals (vUEs) adapted for communicating according to said radio protocol with neighboring base stations of said base station, by using said radio interface module.

10. The treatment method in a base station (e2NB), according to claim 9, comprising a selective distribution step, by the management unit (3), of the use of the radio interface module between the control block (eNB 1), for the communication between said control block (eNB 1) and said at least one first user terminal, and the second virtual terminals for their communication with neighboring base stations.

11. The treatment method in a base station (e2NB) according to claim 9 or 10, according to which the management unit (3) assigns to each second virtual terminal a respective identifier.

12. The treatment method in a base station (e2NB) according to any of claims 9 to 11, according to which said communication protocol is compliant with the LTE standard.

13. The treatment method in a base station (e2NB) according to any of claims 9 to 12, according to which a second virtual user terminal regularly carries out a radio scan, detects neighboring base stations and indicates to the management unit said detected neighboring stations,
and according to which when one of the detected neighboring base stations is not part of the neighboring base stations having a link established with the second virtual terminals, said management unit generates a new second virtual terminal for applying communications between said new second virtual terminal and said detected neighboring base station.

14. The treatment method in a base station (e2NB) according to any of claims 9 to 13, according to which, when the control block (eNB 1) receives, from a first user terminal, a request for applying a communication link with said base station according to said communication protocol, a mobility management block (MME 4) of the base station proceeds with the authentication of said first user terminal according to authentication elements indicated in the request and of authentication information relative to said first user terminal and stored in a base (HSS 5) of the base station comprising authentication information relative to the first and second user terminals;
according to which the management unit (3), when it generates a second virtual user terminal, provides said second virtual user terminal, authentication elements specific to said second virtual terminal,
each second virtual terminal, when it emits a request for applying a communication link intended for a neighboring base station according to said communication protocol, inserts, in said request, said authentication elements provided by the management unit.

15. The treatment method in a base station (e2NB) according to any of claims 9 to 14, according to which the management unit (3) stores a list of the neighboring base stations connected to said base station, and
- each second virtual terminal indicates to the management unit the neighboring base station with which it has established a current communication link, and the management unit updates the list of the neighboring base stations connected to said base station, by inserting into the list, said indicated neighboring base station, matched, in the list, with said second virtual terminal;
- the control block (eNB 1) indicates to the management unit said first terminals with which it has established a current communication link, and when one of said first terminals is a virtual terminal of a neighboring base station of said base station, the management unit updates the list by inserting therein said neighboring base station, matched, in the list, with said first virtual terminal.

16. The treatment method in a base station (e2NB) according to claim 15, according to which the management unit (3) updates routing rules according to said list updated with the neighboring base stations connected to said base station, and a router of the base station routes, according to routing rules updated by the management unit, selectively data towards the control block for emission towards the first user terminals or towards second virtual terminals for emission towards neighboring base stations.
